# EUROPEAN PATENT APPLICATION

(11) **EP 4 382 956 A1**
(43) Date of publication of application: **12.06.2024**
(21) Application number: 22853189.3
(22) Date of filing: 05.08.2022
(51) Int. Cl.: G01S 7/481, F21S 41/13, G01S 17/931

(54) **LIGHT-EMITTING DEVICE, DISTANCE-IMAGING DEVICE, AND MONITORING DEVICE**

(30) Priority: 06.08.2021 JP 2021129920
(71) Applicant: KOITO MANUFACTURING CO., LTD., Minato-ku, Tokyo, 108-8711 (JP)
(72) Inventor: HIRANO Tomiharu, Shizuoka-shi, Shizuoka 424-8764 (JP); MURAKAMI Tomokazu, Shizuoka-shi, Shizuoka 424-8764 (JP); NAKAMURA Toshiyuki, Shizuoka-shi, Shizuoka 424-8764 (JP)
(74) Representative: Grünecker Patent- und Rechtsanwälte PartG mbB
(86) International application number: PCT/JP2022/030139
(87) International publication number: WO 2023/013771

(57) **Abstract**

A plurality of light sources (21) emit light containing a non-visible wavelength band. A housing (28) demarcates at least a portion of the space in which the plurality of light sources (21) are accommodated. The housing (28) has a light transmission portion (281) that allows the passage of light in the non-visible wavelength band and blocks the passage of light in a visible wavelength band.

## Description

### Field

The presently disclosed subject matter relates to a light emitting device including multiple light sources for emitting light used for range-image capturing. The presently disclosed subject matter also relates to a range-image capturing device and a monitoring device each of which includes the light emitting device.

### Background

Patent Document 1 discloses a range-image capturing device adapted to be installed in a vehicle which is an example of a monitoring device. The range-image capturing device includes a light emitting device, an image capturing device, and a computing device. The light emitting device emits light toward an area ahead of the vehicle, which is an example of a monitoring area. The image capturing device captures an image of an object situating in the area based on light reflected by the object. The computing device calculates a distance to the object based on a time period from time when the light is emitted from the light emitting device to time when the light is incident on the image capturing device.

### Citation List

### Patent Document

Patent Document 1: Japanese Patent Publication No. 2009-257983 A

### Summary of the Invention

### Technical Problem

It is demanded to alleviate the burden of optical design for improving a light distribution property of light emitted from a light emitting device provided with multiple light sources.

### Solution to Problem

A first illustrative aspect of the presently disclosed subject matter provides a light emitting device, comprising:
multiple light sources configured to emit light including a non-visible wavelength range; and
a housing defining at least a portion of a space in which the light sources are housed,
wherein the housing includes a translucent portion that allows passage of the light including the non-visible wavelength range while blocking passage of light of a visible wavelength range.

A second illustrative aspect of the presently disclosed subject matter provides a range-image capturing device, comprising:
the light emitting device according to the first illustrative aspect;
an image capturing device configured to capture an image of a subject based on the light reflected by the subject; and
a computing device configured to calculate a distance to the subject based on a time period from time when the light is emitted from the light emitting device to time when the light is incident on the image capturing device.

A third illustrative aspect of the presently disclosed subject matter provides a monitoring device, comprising the range-image device according to the second illustrative aspect, and configured to cause the light emitting device to emit the light toward a prescribed monitoring area.

The multiple light sources are used to supply light for information acquisition to a wider monitoring area. In general, the light emission spectrum of an element adapted to be used as the light source is slightly different from the light emission spectrum of another element adapted to be used as the light source. Accordingly, as the number of the light sources is increased, the spectrum of the composite light forming a final light distribution pattern is likely to include a component deviating from the desired property. In a case where the component is unexpectedly included in the visible wavelength range, the light emitted from the light emitting device would be visually recognized by a person in the monitoring area although the range-image capturing with non-visible light is intended. It is conceivable to compensate the variations of the light emission spectra of the elements by using, as an element that emits light with a center wavelength distant from the visible wavelength range. However, such an element is generally difficult to obtain in comparison with an element that emits light with a center wavelength closer to the visible wavelength range.

According to the configuration of each of the illustrative aspects, even if the light unexpectedly includes a visible wavelength component due to the variation in the light emitting property between elements adapted to be used as the light sources, only the light in the non-visible wavelength range can reach the monitoring area by the wavelength selectivity of the translucent portion of the housing. Since the flexibility in selecting the elements adapted to be used as the light sources can be enhanced, the burden of optical design for improving the light distribution property of the light emitted from the light emitting device provided with the multiple light sources can be alleviated.

### Brief Description of Drawings

FIG. 1 illustrates a configuration of a range-image capturing device according to one embodiment.
FIG. 2 illustrates a vehicle in which the range-image capturing device of FIG. 1 is to be installed.
FIG. 3 is an exploded perspective view illustrating a configuration of a light emitting device of FIG. 1.
FIG. 4 is a front view illustrating an optical member of FIG. 3.
FIG. 5 is a rear view illustrating the optical member of FIG. 3.
FIG. 6 illustrates a cross section viewed from an arrowed direction along a line VI-VI of FIG. 4.
FIG. 7 is a section view illustrating a configuration of the light emitting device of FIG. 1.
FIG. 8 illustrates an appearance of a housing of FIG. 7 as viewed from front.
FIG. 9 illustrates an appearance of the housing as viewed from a direction along an arrow IX in FIG. 8.
FIG. 10 illustrates an appearance of the housing as viewed from a direction along an arrow X in FIG. 9.
FIG. 11 illustrates a light distribution pattern formed with light that has passed through a translucent portion of FIG.7.
FIG. 12 illustrates a light distribution pattern formed with light that has passed through a translucent portion according to a first comparative example.
FIG. 13 illustrates a light distribution pattern formed with light that has passed through a translucent portion according to a second comparative example.

### Description of Embodiments

Examples of embodiments will be described below in detail with reference to the accompanying drawings. In each of the drawings used in the following descriptions, the scale is changed as required in order to make each member have a recognizable size.

In the accompanying drawings, an arrow F represents a forward direction of the illustrated structure. An arrow B represents a rearward direction of the illustrated structure. An arrow U represents an upward direction of the illustrated structure. An arrow D represents a downward direction of the illustrated structure. An arrow R represents a rightward direction of the illustrated structure. An arrow L represents a leftward direction of the illustrated structure. The expressions related to these directions are used for convenience of explanation, and are not intended to limit the directions or postures in actual use of the illustrated structure.

As used herein, the term "front-rear direction" means a direction along the forward direction and the rearward direction described above. As used herein, the term "up-down direction" means a direction along the upward direction and the downward direction described above. As used herein, the term "left-right direction" means a direction along the leftward and the rightward direction described above.

As used herein, the expression "extending in the front-rear direction" includes extending at an inclination with respect to the front-rear direction, and means extending at an inclination closer to the front-rear direction than the up-down direction and the left-right direction.

As used herein, the expression "extending in the up-down direction" includes extending at an inclination with respect to the up-down direction, and means extending at an inclination closer to the up-down direction than the front-rear direction and the left-right direction.

As used herein, the expression "extending in the left-right direction" includes extending at an inclination with respect to the left-right direction, and means extending at an inclination closer to the left-right direction than the front-rear direction and the up-down direction.

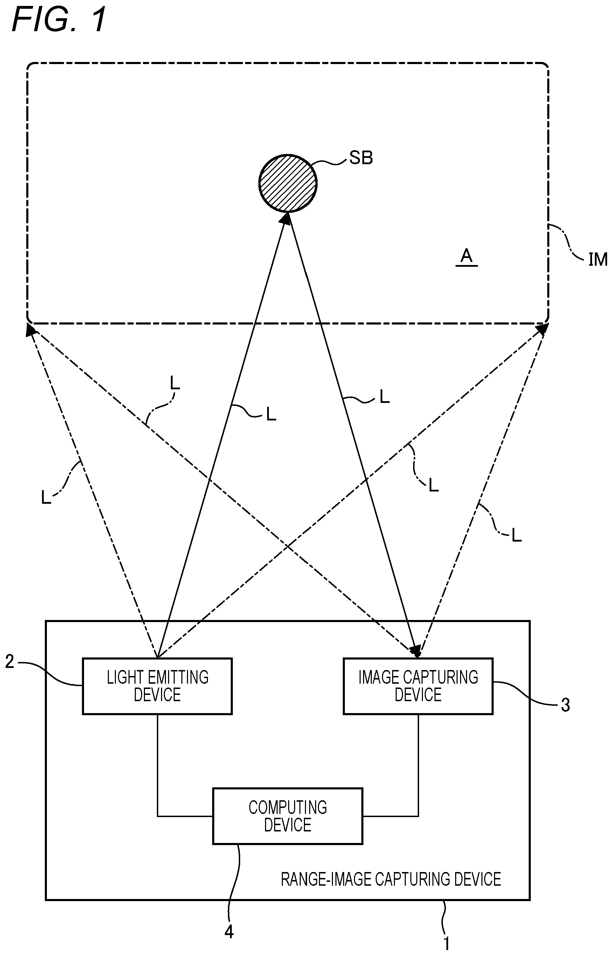

FIG. 1 illustrates a functional configuration of a range-image capturing device 1 according to one embodiment. The range-image capturing device 1 is a device that acquires not only an image IM into which a subject SB situating in a subject area A is captured but also information as to a distance to the subject SB.

The range-image capturing device 1 includes a light emitting device 2. The light emitting device 2 includes a light source that emits light L toward the subject area A. Examples of the light source may include a semiconductor light emitting element such as a light emitting diode (LED), a laser diode (LD), and the like.

The range-image capturing device 1 includes an image capturing device 3. The image capturing device 3 includes a light receiving element that outputs a signal corresponding to light coming from the subject area A. Examples of the light receiving element may include a CMOS image sensor. The image capturing device 3 is configured to capture an image of the subject SB based on the light L reflected by the subject SB.

The range-image capturing device 1 includes a computing device 4. The computing device 4 is configured to calculate a distance to the subject SB based on a time period from time when the light L is emitted from the light emitting device 2 to time when the light L is incident on the image capturing device 3. The TOF (Time of Flight) method is used for calculating the distance. Either the direct TOF method or the indirect TOF method may be used. Since the TOF method itself is well known, detailed descriptions thereof will be omitted.

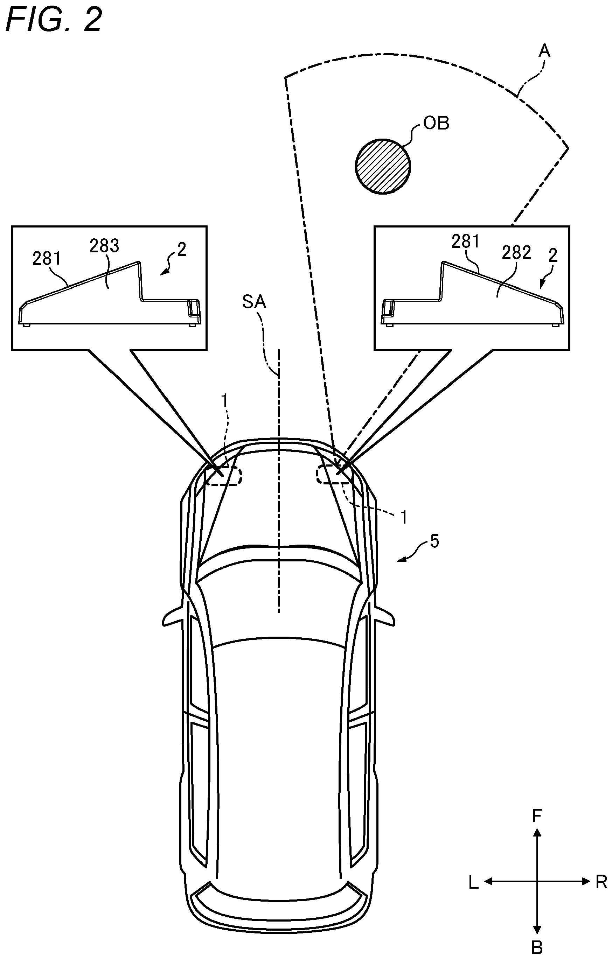

As illustrated in FIG. 2, the range-image capturing device 1 may be installed in a vehicle 5. The position of the range-image capturing device 1 in the vehicle 5 is appropriately determined in accordance with the position of the subject area A. In this example, the range-image capturing device 1 is installed in a right front corner portion of the vehicle 5. As a result, it is possible to monitor the subject area A set around the right corner portion of the vehicle 5. For example, it is possible to monitor the presence or absence of an object OB requiring an avoidance operation of the vehicle 5. The vehicle 5 is an example of a mobility. The vehicle 5 is an example of a monitoring device. The subject area A is an example of a monitoring area.

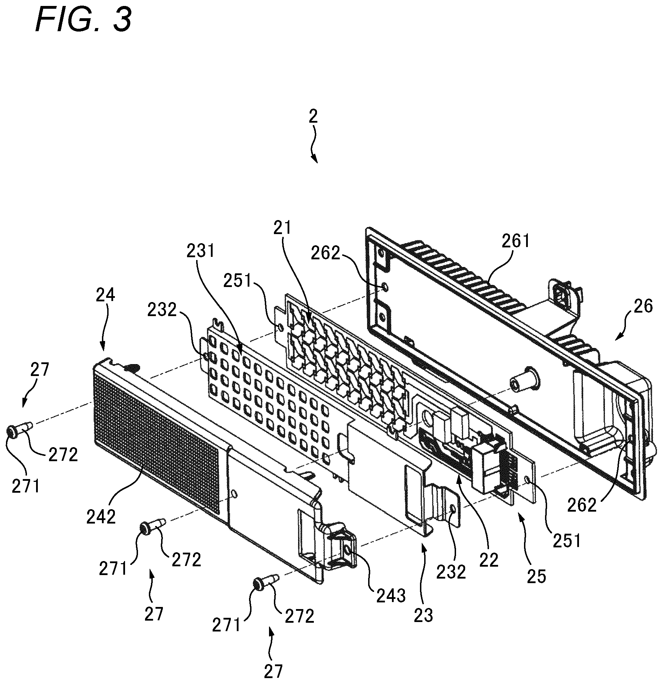

As illustrated in FIG. 3, the light emitting device 2 includes multiple light sources 21. The light sources 21 are arranged so as to form a two-dimensional array. Each of the light sources 21 is configured to emit light used for range-image capturing. In the present embodiment, the light used for the range-image capturing includes an infrared wavelength range. In other words, the light used for the range-image capturing includes a non-visible wavelength range.

The light emitting device 2 includes an electronic component 22. The electronic component 22 includes various elements associated with the operation of the light sources 21. Examples of such elements include a switching element for controlling turning on/off of each of the light sources 21, a temperature sensor for sensing a temperature of an area where the light sources 21 are disposed, and the like.

The light emitting device 2 includes a shield member 23. The shield member 23 is disposed so as to block spatial propagation of noise with respect to the electronic component 22. The noise includes electromagnetic noise and electrostatic noise. The shield member 23 may be formed of a material having conductivity.

The shield member 23 has multiple openings 231. The multiple openings 231 are arranged to form a two-dimensional array. The number of the openings 231 coincides with the number of the light sources 21. In other words, each of the openings 231 is associated with one of the light sources 21.

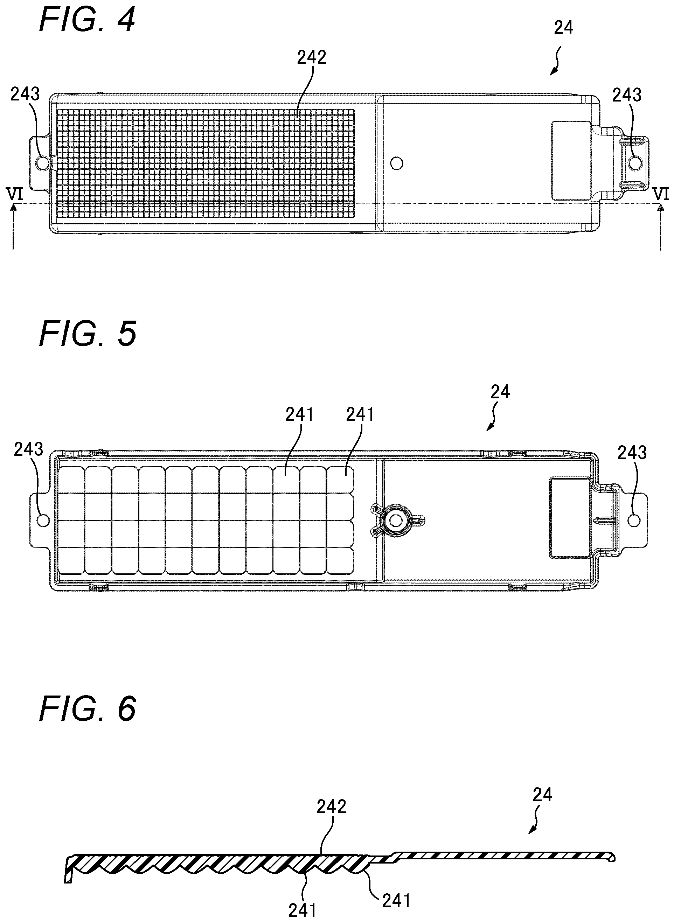

The light emitting device 2 includes an optical member 24. FIG. 4 illustrates an appearance of the optical member 24 as viewed from front. FIG. 5 illustrates an appearance of the optical member 24 as viewed from back. A back face of the optical member 24 faces the shield member 23. FIG. 6 illustrates a cross section of the optical member 24 as viewed from the arrowed direction along the line VI-VI in FIG. 4.

As illustrated in FIGS. 5 and 6, the optical member 24 includes multiple lenses 241. The multiple lenses 241 are arranged to form a two-dimensional array. The multiple lenses 241 are configured to allow passage of light emitted from the multiple light sources 21. The number of the lenses 241 coincides with the number of the openings 231. In other words, each of the lenses 241 is associated with one of the openings 231 and one of the light sources 21.

As illustrated in FIGS. 3, 4, and 6, the optical member 24 includes an emission face 242. The emission face 242 is formed with fine irregularities, and is configured to scatter light passing through the lenses 241. As a result, light L as composite light emitted from the light emitting device 2 is obtained.

As illustrated in FIG. 3, the light emitting device 2 includes a circuit board 25. The light sources 21 and the electronic component 22 are mounted on a common circuit board 25. The light sources 21 and the electronic component 22 are electrically connected through circuit wirings formed on the circuit board 25. The shield member 23 is disposed between the optical member 24 and the circuit board 25 to allow the passage of the light L0 through the multiple openings 231 and to perform the noise blocking with respect to the electronic component 22.

The light emitting device 2 includes a heat sink 26. The heat sink 26 is a component for dissipating heat generated from the multiple light sources 21 and the electronic component 22. The heat sink 26 includes multiple fins 261 for promoting heat dissipation.

The light emitting device 2 includes a fastening member 27. The fastening member 27 is a component for fastening the shield member 23, the optical member 24, and the circuit board 25 to the heat sink 26. The fastening member 27 has a head portion 271 and a shaft portion 272. The fastening member 27 may be, for example, a screw having screw grooves formed in the shaft portion 272.

A first through hole 251 is formed in the circuit board 25. The shield member 23 is formed with a second through hole 232. The optical member 24 is formed with a third through hole 243. The circuit board 25, the shield member 23, and the optical member 24 are arranged in this order as viewed from the heat sink 26 so that the first through hole 251, the second through hole 232, and the third through hole 243 are arranged concentrically.

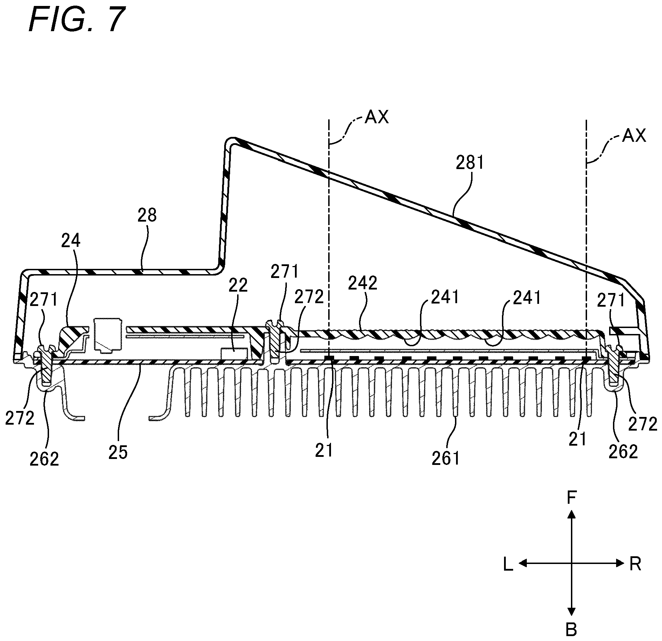

As illustrated in FIG. 7, the fastening member 27 is attached from the side of the optical member 24 so that the shaft portion 272 is disposed in the first through hole 251, the second through hole 232, and the third through hole 243. When the shaft portion 272 is screwed into a receiving portion 262 formed in the heat sink 26, the head portion 271 presses the optical member 24 toward the heat sink 26. Accordingly, the shield member 23 and the circuit board 25 are also pressed toward the heat sink 26, so that the fastening is performed.

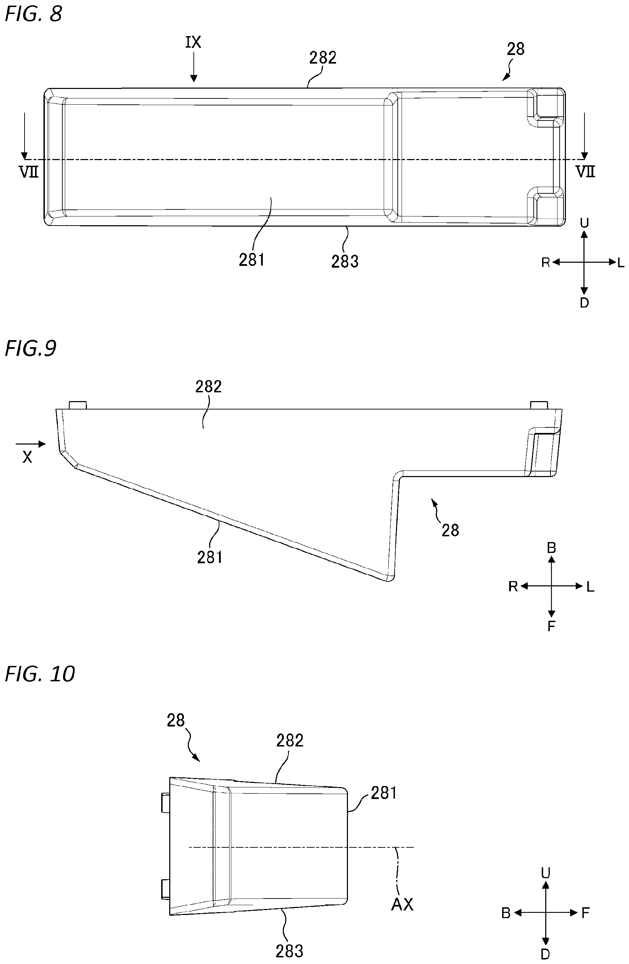

The light emitting device 2 includes a housing 28. The housing 28 defines a space in which the light sources 21 are housed together with the heat sink 26. FIG. 8 illustrates an appearance of the housing 28 as viewed from front. FIG. 7 illustrates a cross section as viewed from the arrowed direction along the line VII-VII in FIG. 8. FIG. 9 illustrates an appearance of the housing 28 as viewed from a direction along an arrow IX in FIG. 8. FIG. 10 illustrates an appearance of the housing 28 as viewed from a direction along an arrow X in FIG. 9.

As illustrated in FIG. 7, the housing 28 has a translucent portion 281. The translucent portion 281 is disposed at a position that allows passage of the light L emitted from the light sources 21. In other words, the translucent portion 281 is disposed on an extension of the optical axis AX of each light source 21.

The translucent portion 281 is configured to allow passage of light in a non-visible wavelength range and to block passage of light in a visible wavelength range. The translucent portion 281 may be implemented by forming the housing 28 with a material having the wavelength selectivity, or by forming a layer having the wavelength selectivity on a surface of the housing 28 formed with a material that allows the passage of light in the visible wavelength range.

The multiple light sources 21 are used to supply light L for the range-image capturing to a wider subject area A. In general, the light emission spectrum of an element adapted to be used as the light source 21 is slightly different from the light emission spectrum of another element adapted to be used as the light source 21. Accordingly, as the number of the light sources 21 is increased, the spectrum of the composite light forming a final light distribution pattern is likely to include a component deviating from the desired property. In a case where the component is unexpectedly included in the visible wavelength range, the light L emitted from the light emitting device 2 would be visually recognized by a person in the subject area A although the range-image capturing with non-visible light is intended. It is conceivable to compensate the variations of the light emission spectra of the elements by using, as an element that emits light with a center wavelength distant from the visible wavelength range. However, such an element is generally difficult to obtain in comparison with an element that emits light with a center wavelength closer to the visible wavelength range.

According to the configuration of the present embodiment, even if the light L unexpectedly includes a visible wavelength component due to the variation in the light emitting property between elements adapted to be used as the light sources 21, only the light in the non-visible wavelength range can reach the subject area A by the wavelength selectivity of the translucent portion 281 of the housing 28. Since the flexibility in selecting the elements adapted to be used as the light sources 21 can be enhanced, the burden of optical design for improving the light distribution property of the light L emitted from the light emitting device 2 provided with the multiple light sources 21 can be alleviated.

It should be noted that the expression "improving the light distribution property of light emitted from the light emitting device" as used herein is intended to not only make the light distribution pattern formed by the light L actually emitted from the light emitting device 2 close to a desired shape but also reduce a component deviating from a desired wavelength range included in the emitted light L.

The configuration according to the present embodiment is particularly advantageous in a case where the visible wavelength component is in a red wavelength range. In a case where the subject area A is set ahead of the vehicle 5 as illustrated in FIG. 2, the translucent portion 281 of the housing 28 can prevent the emission of red light to an area ahead of the vehicle 5 that shall be restricted by legal regulation.

As illustrated in FIGS. 7 and 10, the optical axis AX of the light source 21 extends in the front-rear direction of the light emitting device 2. The translucent portion 281 of the housing 28 has a part extending in the up-down direction orthogonal to the optical axis AX. The up-down direction is an example of a first direction.

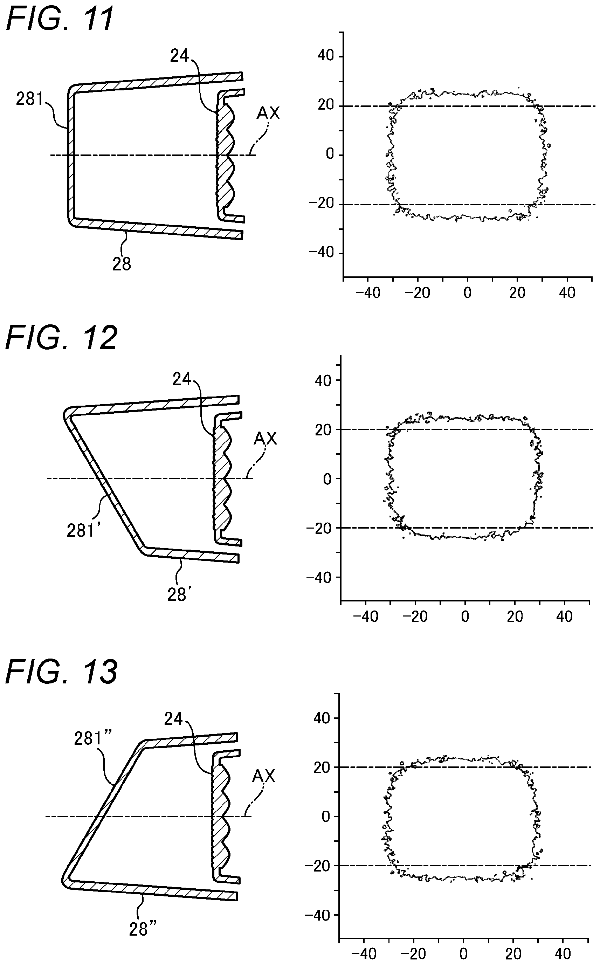

The advantages of such a configuration will now be described with reference to FIGS. 11 to 13. FIG. 11 illustrates a contour shape of a light distribution pattern formed by the light L that has passed through the translucent portion 281 of the housing 28 according to the present embodiment. FIG. 12 illustrates a contour shape of a light distribution pattern formed by the light L that has passed through a translucent portion 281' of a housing 28' according to a first comparative example. FIG. 13 illustrates a contour shape of a light distribution pattern formed by the light L that has passed through a translucent portion 281" of a housing 28" according to a second comparative example.

In each drawing illustrating the light distribution pattern, a numeral on the horizontal axis represents a deviation angle in the horizontal direction from a direction in which the optical axis AX of the light source 21 extends in a case where the direction is defined so as to correspond to 0 degrees. A numeral on the vertical axis represents a deviation angle in the vertical direction from the direction in which the optical axis AX of the light source 21 extends in a case where the direction is defined so as to correspond to 0 degrees.

As illustrated in FIG. 12, the translucent portion 281' according to the first comparative example is oriented obliquely downward with respect to a horizontal plane. In other words, the translucent portion 281' intersects the optical axis AX of the light source 21 obliquely. The shape of the light distribution pattern formed by the light L passing through the translucent portion 281' is deviated upward from the horizontal axis.

As illustrated in FIG. 13, the translucent portion 281" according to the second comparative example is oriented obliquely upward with respect to the horizontal plane. In other words, the translucent portion 281" intersects the optical axis AX of the light source 21 obliquely. The shape of the light distribution pattern formed by the light L passing through the translucent portion 281" is deviated downward from the horizontal axis.

On the other hand, as is apparent from FIG. 11, the light distribution pattern formed by the light L that has passed through the translucent portion 281 according to the present embodiment that extends in the up-down direction orthogonal to the optical axis AX has a shape substantially symmetrical with respect to the horizontal axis. This fact means that even if the upper and lower sides of the light emitting device 2 are arranged reversely, a significant change in the light distribution property is not observed.

For example, in a case where the light emitting device 2 is disposed in a right front corner portion of the vehicle 5 as illustrated in FIG. 2, a first horizontal wall 282 and a second horizontal wall 283 of the housing 28 illustrated in FIG. 8 are facing upward and downward, respectively. The light emitting device 2 whose posture is changed such that the first horizontal wall 282 and the second horizontal wall 283 are facing downward and upward, respectively, can obtain the same light distribution property as the light emitting device 2 disposed in the right front corner portion even if it is disposed in a left front corner portion of the vehicle 5 as illustrated in FIG. 2.

Accordingly, in a case where multiple light emitting devices 2 are disposed at positions symmetrical with respect to a symmetrical axis SA extending in the front-rear direction defined in the vehicle 5, it is not necessary to make the specifications of the light emitting device 2 different for each position. In other words, it is possible to dispose multiple light emitting devices 2, that have a common specification provided with the translucent portion 281 extending in the first direction orthogonal to the optical axis AX of the light source 21, at positions arranged in a second direction orthogonal to the first direction so as to be symmetrical with respect to a symmetrical axis extending in a direction along the optical axis AX. As a result, it is possible to suppress an increase in the manufacturing cost and the management cost.

As illustrated in FIGS. 7 to 10, the housing 28 has an asymmetric shape in the left-right direction. The left-right direction is an example of the second direction. As illustrated in FIG. 7, the translucent portion 281 of the housing 28 obliquely intersects the optical axis AX of the light source 21 in the left-right direction. However, as can be seen from the comparison of the light distribution patterns exemplified in FIGS. 11 to 13, the influence of the configuration on the shape of the light distribution pattern is negligible as compared with the up-down direction. Accordingly, it is possible to cause the housing 28 to have a shape with high adaptability or compatibility with respect to the design of the vehicle 5 to which the housing 28 is to be mounted.

The above embodiments are merely illustrative to facilitate understanding of the presently disclosed subject matter. The configuration according to each of the above embodiments can be appropriately modified or combined with another embodiment within the gist of the presently disclosed subject matter.

The light emitting device 2, the image capturing device 3, and the computing device 4 constituting the range-image capturing device 1 do not have to be housed in a common housing. At least one of the image capturing device 3 and the computing device 4 may be disposed at an appropriate position in the vehicle 5 independently of the light emitting device 2.

The range-image capturing device 1 may be installed in a mobility other than the vehicle 5. Examples of other mobilities may include railways, flying objects, aircrafts, and ships. The mobility may not require a driver. The mobility is also an example of the monitoring device.

The range-image capturing device 1 does not have to be installed in a mobility. As an example, the range-image capturing device 1 may be installed in a traffic infrastructure facility such as a street lamp or a traffic light. In this case, the subject area A may be set to include a road. As another example, the range-image capturing device 1 can be applied to a security system adapted to be installed in a house, a facility or the like to detect a subject entering a subject area A.

The light L emitted from the light emitting device 2 has not to be used for the range-image capturing. For example, the light emitting device 2 having the above-described configuration may be used to emit light in a non-visible wavelength range used in a LiDAR (Light Detection and Ranging) sensor that measures a distance to an object.

Depending on the application in which the light emitting device 2 is used, at least one of the shield member 23 and the optical member 24 may be omitted.

The present application is based on Japanese Patent Application No. 2021-129920 filed on August 6, 2021, the entire contents of which are incorporated herein by reference.

## Claims

1. A light emitting device, comprising:
multiple light sources configured to emit light including a non-visible wavelength range; and
a housing defining at least a portion of a space in which the light sources are housed,
wherein the housing includes a translucent portion that allows passage of the light including the non-visible wavelength range while blocking passage of light of a visible wavelength range.

2. The light emitting device according to claim 1,
wherein the visible wavelength range includes a red wavelength range.

3. The light emitting device according to claim 1 or 2,
wherein the translucent portion includes a part extending in a first direction orthogonal to an optical axis of each of the light sources.

4. The light emitting device according to claim 3,
wherein the housing has an asymmetrical shape relative to a second direction that is orthogonal to the optical axis and the first direction.

5. A range-image capturing device, comprising:
the light emitting device according to any one of claims 1 to 4;
an image capturing device configured to capture an image of a subject based on the light reflected by the subject; and
a computing device configured to calculate a distance to the subject based on a time period from time when the light is emitted from the light emitting device to time when the light is incident on the image capturing device.

6. A monitoring device, comprising the range-image device according to claim 5, and configured to cause the light emitting device to emit the light toward a prescribed monitoring area.

7. The monitoring device according to claim 6, being a mobility.
